# NOUVEAU FASCICULE DE BREVET EUROPEEN

(11) **EP 0 219 409 B2**
(45) Date de publication et mention de la décision concernant l'opposition: **27.12.1995**
(45) Mention de la délivrance du brevet: 21.03.1990
(21) Numéro de dépôt: 86402145.6
(22) Date de dépôt: 01.10.1986
(51) Int. Cl.: B05B 5/053

(54) **Appareil de projection électrostatique protégé contre l'apparition d'arcs électriques**
Elektrostatisches Spritzgerät mit Vorrichtung zum Verhindern von Lichtbogen
Electrostatic spraying device protected against the occurrence of electric arcs

(30) Priorité: 02.10.1985 FR 8514596
(43) Date de publication de la demande: 22.04.1987
(73) Titulaire: SAMES S.A., F-38240 Meylan (FR)
(72) Inventeur: Thome, Caryl, F-38120 Saint Egreve (FR)
(74) Mandataire: CABINET BONNET-THIRION

(56) Documents cités:
- EP-A- 0 135 424
- CH-A- 532 859
- DE-A- 3 340 010
- DE-B- 3 219 236
- FR-A- 2 551 928
- GB-A- 1 530 479
- US-A- 3 875 892
- US-A- 4 187 527
- US-A- 4 508 276

## Description

L'invention se rapporte à un appareil de projection électrostatique d'un produit de revêtement tel que par exemple de la peinture et concerne plus particulièrement un perfectionnement permettant d'éviter la création d'arcs électriques pouvant représenter un réel danger lorsque le produit de revêtement contient des substances volatiles et inflammables.

Un appareil de projection électrostatique comporte notamment un projecteur mobile muni d'une électrode haute tension et agencé pour créer un champ électrique entre ladite électrode et l'objet à recouvrir (ce dernier étant mis à la terre) et pour disperser le produit de revêtement. Pour ce faire, l'appareil de projection comprend, outre l'électrode, des moyens d'alimentation en produit de revêtement, en énergie de projection (air) et en énergie électrique. Le projecteur est donc relié à une unité d'alimentation et de contrôle, fixe, par un toron de câbles électriques et de conduits divers. L'énergie électrique est presque toujours délivrée par le projecteur sous forme d'une haute tension continue de l'ordre de 50 à 150 kV, appliquée à l'électrode, Le courant résultant représenté par le flux de particules chargées et les ions atmosphériques créés ou entraînés par le champ, est de l'ordre de 50 à 200 uA. Plusieurs solutions ont été proposées pour appliquer la haute tension à l'électrode du projecteur.

On peut appliquer directement la haute tension à l'électrode, à partir d'un générateur haute tension situé dans l'unité d'alimentation et de contrôle placée à distance. Celle-ci renferme donc les organes de conversion de l'énergie électrique fournie par le réseau alternatif de distribution en une haute tension continue. Le toron d'alimentation mentionné ci-dessus comporte alors nécessairement un câble haute tension à gaine isolante adaptée en conséquence.

On peut aussi alimenter le projecteur à partir d'une très basse tension continue (quelques dizaines de volts) si ledit projecteur renferme un montage en cascade d'un oscillateur haute fréquence alimenté par cette très basse tension continue, d'un transformateur élévateur délivrant une moyenne tension haute fréquence (de l'ordre de quelques kV) et d'un classique ensemble redresseur-multiplicateur de tension (à condensateurs et diodes) transformant la moyenne tension haute fréquence en haute tension continue, cette dernière étant appliquée à l'électrode. Dans ce cas, l'unité d'alimentation et de contrôle comporte seulement un transformateur abaisseur et un redresseur pour transformer la basse tension alternative du réseau de distribution en très basse tension continue. Le toron d'alimentation précité comporte des conducteurs (sans isolation renforcée) transportant ce courant continu vers l'oscillateur.

On a aussi proposé de ne placer que le transformateur et l'ensemble redresseur-multiplicateur de tension dans le projecteur. L'oscillateur est ainsi reporté à distance dans l'unité d'alimentation et de contrôle. Dans ce cas, le toron d'alimentation transporte un signal alternatif très basse tension, haute fréquence. L'invention qui sera décrite plus loin s'applique de préférence à un tel agencement bien que son principe puisse être mis en oeuvre avec tout système comportant une conversion du type continu/alternatif-haute fréquence.

Les arcs électriques observés en fonctionnement peuvent avoir des causes diverses:

Quel que sort le dispositif utilisé, il peut arriver que la distance entre l'électrode haute tension du projecteur et la pièce à recouvrir mise à la terre devienne insuffisante pour supporter la valeur de la haute tension continue.

Si la haute tension est élaborée à distance du projecteur, un défaut d'isolement du câble haute tension peut aussi être une cause d'arcs électriques.

En revanche, si la haute tension est élaborée dans le projecteur, le toron transporte un courant relativement important (quelques ampères) et une rupture de conducteur ou un mauvais contact de raccordement est susceptible de provoquer un arc électrique en raison de l'énergie emmagasinée dans l'inductance du circuit.

Différents systèmes ont été proposés pour lutter contre la formation d'arcs électriques. Ces systèmes connus se distinguent les uns des autres selon le type d'arc électrique que l'on cherche à éliminer.

Le document CH-A-532 859 montre un circuit de détection comportant un amplificateur de courant formant comparateur différentiel. Celui-ci n'est capable de détecter un défaut que lorsque le courant de sortie est déjà très élevé. Le document US 4508276 décrit un appareil de projection éléctrosta- tique muni d'une unité d'alimentation protégée contre les surcharges de courant. La boucle de sécurité est conçue, pour n'entrer en action que lorsque le courant excède la limite supérieure de la plage de fonctionnement normal.

Il est aussi connu de prévenir l'apparition d'arcs en contrôlant le courant continu de l'ensemble redresseur-multiplicateur de tension, généralement au niveau de son retour à l'alimentation. En effet, l'amorçage d'un arc électrique implique une brutale augmentation de courant dans ce circuit et cette augmentation de courant peut être exploitée par des moyens électroniques pour agir sur les moyens d'élaboration de la haute tension. Un tel dispositif est par exemple décrit dans le brevet français N _{°} 2397735. L'inconvénient de nombreux dispositifs de ce type est qu'une éventuelle défaillance des moyens de contrôle (en série avec l'alimentation haute tension) crée des perturbations susceptibles d'entraîner la destruction de certains composants de l'alimentation. En effet, si la mise à la terre du redresseur-multiplicateur de tension est coupée, on enregistre une augementation de tension importante sur la borne correspondante de l'alimentation haute tension, cette augmentation de tension étant dangereuse pour les composants. En outre, le courant de retour est souvent pris comme signal de contre-réaction pour le réglage de l'alimentation, une diminution du courant étant exploitée dans un asservissement pour commander une augmentation de la haute tension. Par conséquent, une défaillance des moyens de contrôle peut se traduire par une augmentation indésirable de la haute tension. Ces risques sont sensiblement plus importants dans les appareils comportant les moyens d'élaboration de la haute tension dans le projecteur puisque le conducteur de retour de courant passe dans le toron d'alimentation et est donc plus vulnérable en raison de sa longueur. Par ailleurs, le courant contrôlé n'est pas à proprement parler continu, mais plutôt du type "unidirectionnel ondulé" et il comporte une composante alternative liée aux capacités parasites du multiplicateur de tension, cette composante alternative se superposant à la composante continue. Par conséquent, d'éventuels moyens de détection de l'augmentation de ce courant doivent comporter un filtrage sérieux pour éviter que le front de la composante alternative soit "interprété" comme une augmentation de courant par les circuits de contrôle. La nécessité d'un tel filtrage implique souvent un temps de réponse médiocre du circuit de contrôle. Celui-ci est donc toujours très complexe et par conséquent assez onéreux et fragile.

On a aussi proposé de contrôler les variations rapides de haute tension qui précédent l'apparition d'un arc électrique, au moyen d'un diviseur capacitif. Ce principe est exposé dans le brevet français N _{°} 1601577. Cette solution est surtout efficace lorsque l'arc en formation est plus particulièrement dû à une diminution de la distance entre l'électrode haute tension et l'objet à recouvrir.

Enfin, il est connu de contrôler le courant continu basse tension lorsque le projecteur est alimenté par cette basse tension (c'est-à-dire lorsqu'il renferme l'oscillateur et le redresseur-multiplicateur) en comparant ce courant à une valeur de référence. Un tel dispositif est par exemple décrit dans le brevet français N _{°} 2 551 928. Les moyens de contrôle ne font que surveiller la continuité du circuit pour réagir à une baisse brutale du courant d'alimentation de l'oscillateur. Ils ne peuvent donc détecter que ce type de défaut et ne dispensent pas de l'utilisation d'un circuit de contrôle de la haute tension elle-méme, semblable à l'un de ceux qui est décrit ci-dessus, avec les inconvénients mentionnés.

L'invention vise une solution plus efficace et moins coûteuse, capable de détecter plusieurs anomalies de fonctionnement précedant la naissance d'un arc électrique et conçue pour qu'une mise hors service accidentelle des moyens de contrôle n'entraîne pas la détérioration d'autres composants.

Dans cet esprit, l'invention concerne un appareil de projection d'un produit de revêtement selon la revendication 1.

Ainsi, une variation "positive" de la valeur du courant, le plus souvent conséquence d'un rapprochement de l'électrode haute tension par rapport à la pièce à recouvrir, donnera lieu à l'élaboration d'un signal d'inhibition agissant de préférence pour bloquer l'oscillateur tandis qu'une brusque variation "négative" sera généralement le signe d'une coupure ou d'un mauvais contact au niveau du toron d'alimentation et donnera lieu au même résultat. Comme mentionné ci-dessus, compte tenu du fait que le contrôle s'exerce en mesurant le courant délivré par l'oscillateur, l'invention s'applique de façon plus avantageuse à un appareil dans lequel le transformateur élévateur et le multiplicateur de tension sont dans le projecteur et sont alimentés sous très basse tension haute fréquence, par l'oscillateur situé dans l'unité d'alimentation et de commande reliée par un toron au projecteur, Les moyens de détection peuvent ainsi être placés dans cette dernière tout en "surveillant" efficacement le bon état du toron, entre autres. De plus, ces moyens de contrôle sont moins exposés du fait qu'ils sont placés dans l'unité de contrôle et leur défaillance même ne pourra se traduire que par un blocage de l'oscillateur, c'est-à-dire une mise hors service de l'appareil.

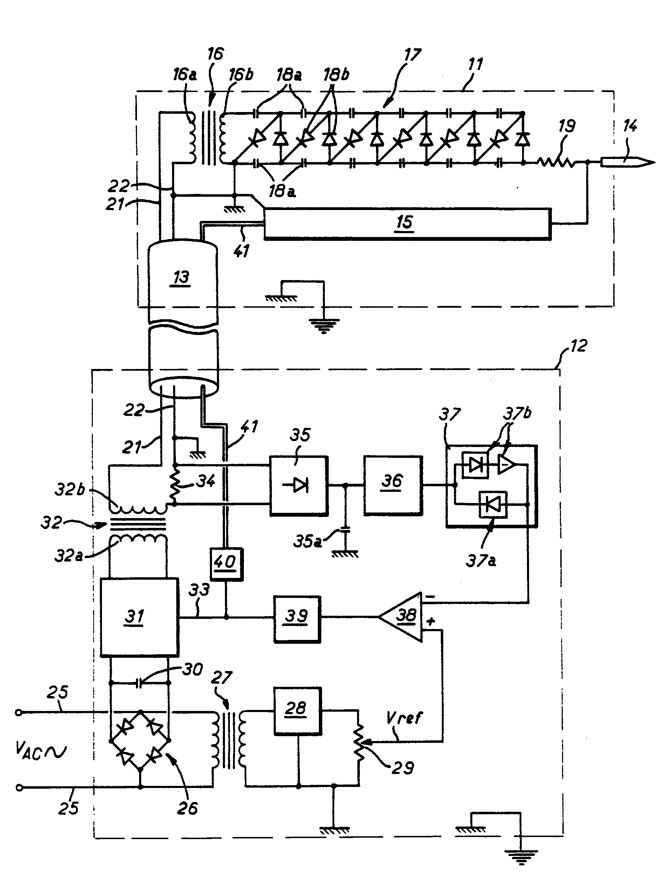

L'invention sera mieux comprise et d'autres avantages de celle-ci apparaîtront plus clairement à la lumière de la description qui va suivre d'un mode de réalisation actuellement préféré d'un appareil de projection électrostatique conforme à son principe, donnée uniquement à titre d'exemple et faite en référence au dessin annexé dans lequel:
- la figure unique est un schéma de principe d'un circuit électronique d'alimentation en haute tension d'une électrode de projecteur électrostatique.

L'appareil schématisé au dessin se compose d'un projecteur 11 de produit de revêtement, mobile, et d'une unité d'alimentation et de contrôle 12, fixe, située à distance et reliée au projecteur par un ensemble de conducteurs électriques et de conduits divers réunis, ici, en un toron 13, bien que cela ne soit nullement impératif. Seuls, les éléments de structure utiles à la compréhension de l'invention ont été représentés sur le schéma. D'autres sous-ensembles classiques comme les moyens d'alimentation en produit de revêtement et les moyens d'alimentation en air, n'ont pas été représentés. Le projecteur est muni d'une électrode 14 placée de façon à charger le flux de produit de revêtement éjecté sous forme divisée vers la pièce à recouvrir. Pour ce qui concerne la partie électrique, le projecteur 11 comporte essentiellement un transformateur élévateur 16, moyenne tension haute fréquence, dont l'enroulement secondaire 16b est connecté à un ensemble redresseur-élévateur de tension 17, classique, à condensateurs 18a, et diodes 18b. La sortie haute tension de cet ensemble est reliée à l'électrode 14 par l'intermédiaire d'une résistance d'amortissement 19. Le "pied" de l'enroulement secondaire 16b est relié à la masse du projecteur 11 et, puisque le projecteur est un ensemble mobile, par l'intermédiaire d'un fil conducteur 22 du toron 13, à la masse de l'unité 12, les masses du projecteur 11 et de l'unité 12 étant reliées à la terre, comme cela apparaît clairement sur le schéma. Le projecteur 11 abrite aussi un moyen de mise à la terre 15 de la sortie dudit moyen élévateur de tension, connecté à l'électrode 14, commandé (ici, pneumatiquement) et électriquement interconnecté entre ladite électrode 14 et la masse du projecteur, c'est-à-dire la terre; ce moyen de mise à la terre sera décrit plus loin. Les deux bornes de l'enroulement primaire 16a du transformateur haute fréquence 16 sont reliées par deux fils 21, 22 respectifs à l'unité d'alimentation et de contrôle 12. Cette dernière est connectée au réseau alternatif de distribution V_{AC} par deux conducteurs 26 alimentant un pont redresseur à diodes 26 et l'enroulement primaire d'un transformateur auxiliaire 27. L'enroulement secondaire de ce transformateur est connecté à un circuit intégré 28 formant alimentation stabilisée et un potentiomètre 29 connecté à la sortie de ce circuit permet de disposer d'une tension de référence réglable Vref, disponible sur le curseur dudit potentiomètre. La tension redressée par le pont redresseur 26 est filtrée par un condensateur 30 et alimente un hacheur-oscillateur 31, haute fréquence, incluant en sortie l'enroulement primaire 32a d'un transformateur d'isolement 32, abaisseur de tension. Le hacheur-oscillateur 31 est ici d'un type connu à circuit intégré et transistors. Il peut dont être facilement bloqué en appliquant un signal convenable sur une entrée de commande correspondante. On a représenté en 33 une telle entrée sur laquelle ce signal de blocage peut être appliqué. De tels hacheurs-oscillateurs sont des sous-ensembles disponibles dans le commerce. Les deux fils conducteurs 21, 22 sont reliés aux extrémités respectives de l'enroulement secondaire 32b du transformateur abaisseur 32. Bien entendu, l'ensemble constitué par le hacheur-oscillateur 31 et le transformateur 32 ne constitue qu'un mode de réalisation possible d'un moyen générateur d'un signal alternatif très basse tension (de relativement haute fréquence), lequel alimente un moyen élévateur de tension situé dans le projecteur 11 et constitué, comme on l'a vu précédemment, par le transformateur élévateur 16 et l'ensemble redresseur-élévateur de tension 17. D'autres dispositifs connus peuvent être utilisés en lieu et place du hacheur-oscillateur 31, notamment tout type d'oscillateur ou d'onduleur (à transistors ou thyristors) susceptibles de délivrer la puissance requise.

Selon l'invention, on prévoit des moyens 34, 35, 36, 37 et 38 sensibles aux variations du courant alternatif circulant dans les conducteurs 21 et 22 reliant le moyen générateur 31, 32 d'une signal alternatif et le moyen élévateur de tension 16, 17, ainsi qu'un moyen d'inhibition 39 dudit moyen générateur, piloté par lesdits moyens sensibles aux variations de courant. Par moyen d'inhibition, on entend tout agencement susceptible d'empêcher l'application d'un signal périodique à l'enroulement primaire du transformateur 16. C'est pourquoi le moyen d'inhibition 39 se résumera le plus souvent à un relais bistable à thyristors ou même à un simple thyristor, connecté à l'entrée de blocage 33, le branchement de ce sous-ensemble étant à la portée de l'homme du métier. Cependant, on peut imaginer d'autres moyens pour empêcher qu'un signal périodique soit appliqué au transformateur 16, comme par exemple un disjoncteur électronique ou électromagnétique connecté pour isoler le hacheur-oscillateur du pont redresseur 26 ou encore un disjoncteur placé dans l'unité 12 et connecté pour isoler les fils conducteurs 21 et 22 du transformateur 32. Les moyens sensibles aux variations du courant alternatif comportent quant à eux, un montage en cascade d'un moyen sensible audit courant 34, 35 coupé au circuit reliant les transformateurs 32 et 16, d'un moyen différenciateur 36, d'un moyen redresseur-adaptateur de niveau 37 et d'un comparateur 38 dont la sortie pilote le moyen d'inhibition 39. Le moyen sensible au courant délivre audit moyen différenciateur une tension continue représentative du courant circulant dans le conducteur 22. Il se compose pour cela d'une simple résistance 34 insérée en série dans ce conducteur et d'un circuit de redressement 35 connecté aux bornes de la résistance et dont la tension de sortie, filtrée par un condensateur 35a est appliquée à l'entrée du moyen différenciateur 36. Le condensateur 35a est de relativement faible valeur, (ce qui est possible du fait que le courant alternatif mesuré est de relativement haute fréquence), pour ne pas trop "amortir" les variations de tension appliquées à l'entrée du moyen différenciateur 36. Celui-ci délivre donc à sa sortie des impulsions positives ou négatives suivant le sens de la variation de courant dans la résistance 34. Les impulsions négatives sont appliquées telles quelles à une entrée du comparateur 38 via une première branche 37a, assimilable à une diode, dudit moyen redresseur-adaptateur de niveau tandis que les impulsions positives sont appliquées à cette même entrée via une seconde branche 37b, en parallèle sur la première. Cette seconde branche est assimilable à un montage en cascade d'une diode et d'un amplificateur-inverseur de polarité; la diode étant connectée en sens inverse par rapport à la branche 37a. Il est bien entendu que l'invention couvre tous les équivalents techniques possibles du moyen 37, remplissant une fonction semblable. Avec cet agencement, les impulsions positives sont inversées et amplifiées avant d'être appliquées à l'entrée du comparateur 38. L'autre entrée de ce comparateur 38 est reliée au curseur du potentiomètre 29 et reçoit donc la tension du référence Vref. Toute impulsion positive ou négative engendrée par le moyen différenciateur peut donc faire basculer le moyen d'inhibition 39 (sous l'action d'un signal délivré par le comparateur 38) pourvu qu'elle ait une amplitude suffisante. Cependant, en raison de l'amplification donnée aux impulsions positives appliquées par l'intermédiaire de la branche 37b, le moyen d'inhibition 39 pourra basculer sous l'effet d'une augmentation de courant, dans la résistance 34, moins rapide que la diminution de courant nécessaire pour obtenir le même basculement. Ceci se justifie par la nature des défauts qui provoquent les variations de courant dans la résistance 34 et le conducteur 22. En effet, si on enregistre une augmentation du courant, due par exemple à un rapprochement entre l'électrode 14 et l'objet à recouvrir, cette variation de courant est beaucoup plus lente que celle (négative puisqu'il s agit d'une diminution) qui peut résulter, par exemple, d'une rupture de la liaison entre les transformateurs 32 et 16. L'amplitude d'une impulsion positive engendrée par le moyen différenciateur 36 est donc nécessairement plus faible (jusqu'à un million de fois plus faible) que l'amplitude d'une impulsion négative. Le moyen redresseur-adaptateur de niveau 37 permet en toutes circonstances de commander le basculement du moyen d'inhibition 39. Ce dernier pilote aussi une électrovanne 40 qui, par un conduit pneumatique 41 commande le moyen de mise à la terre 15. Ce dernier est, selon l'exemple, conforme au dispositif décrit dans le brevet français N _{°} 2550882 au nom de la Demanderesse. On peut aussi utiliser d'autres types de dispositifs de mise à la terre, comme par exemple celui commercialisé par la firme américaine "KILO-VAC-CORPORATION" sous la référence KC6(NC), le conduit pneumatique 41 étant alors remplacé par une liaison de commande, électrique.

Ainsi, dès qu'une variation de courant trop importante, positive ou négative, est enregistrée dans le résistance 34 les moyens électroniques qui viennent d'être décrits réagissent pour bloquer le hacheur-oscillateur 31 et pour mettre l'électrode 14 à la terre, ce qui a pour conséquence d'une part, de couper l'alimentation du moyen élévateur de tension et, d'autre part, de décharger le redresseur-élévateur de tension 17 avant l'apparition du premier arc électrique. Il est aussi remarquable qu'une mise à la terre accidentelle du conducteur 21, en particulier dans le toron 13, puisse aussi être détectée grâce à l'augmentation de courant qu'elle entraîne dans la résistance 34 qui se trouve alors directement connectée entre les bornes du secondaire 32b.

## Revendications

1. Appareil de projection électrostatique d'un produit de revêtement du type comportant une unité d'alimentation et de contrôle (12) et un projecteur (11) de produit de revêtement, reliés par un ensemble de conducteurs formant de préférence toron, ladite unité incluant un moyen générateur d'un signal alternatif basse tension (31, 32) et un moyen d'inhibition (39) de celui-ci et ledit appareil incluant un moyen élévateur de tension (16, 17) alimenté par ledit moyen générateur, caractérisé en ce qu'il comporte
- un moyen (34, 35) sensible aux variations de courant alternatif délivré par ledit moyen générateur et circulant dans un conducteur reliant ledit moyen générateur et ledit moyen élévateur de tension, ledit moyen sensible étant connecté à ce conducteur et délivrant un premier signal représentatif desdites variations;
- un moyen différentiateur (36) dudit premier signal; apte à générer un second signal représentatif d'une variation positive ou négative dudit courant sur sensiblement toute la plage de variation dudit courant;
- un moyen redresseur-adaptateur de niveau (37) connecté à la sortie dudit moyen différentiateur et présentant deux branches parallèles (37a, 37b) transmettant respectivement les composantes positives et négatives dudit second signal avec des taux d'amplification différents;
- un comparateur (38) dont une première entrée est connectée à une sortie dudit moyen redresseur-adaptateur de niveau et une seconde entrée à un moyen d'élaboration d'une tension de référence (28, 29);
- ledit moyen d'inhibition étant piloté par le comparateur.

2. Appareil selon la revendication 1 caractérisé en ce que ledit moyen sensible au courant comporte une résistance (34) insérée en série dans un conducteur (22) reliant ledit moyen générateur audit moyen élévateur, ainsi qu'un circuit de redressement (35) connecté aux bornes de cette résistance.

3. Appareil selon l'une des revendications précédentes, caractérisé en ce que ledit moyen d'inhibition (39) est relié à une entrée de blocage (33) d'un hacheur-oscillateur (31) ou analogue du moyen générateur d'un signal alternatif précité.

4. Appareil selon l'une des revendications précédentes, caractérisé en ce que ledit moyen d'inhibition est connecté pour piloter un moyen de mise à la terre (15) de la sortie dudit moyen élévateur de tension.

## Claims

1. An apparatus for the electrostatic projection of a coating product, of the type comprising a supply and control unit (12) and a projector (11) for coating product, connected by an assembly of conductors preferably forming a harness, said unit including a means (31, 32) for generating a low-voltage alternating signal and a means (39) for inhibition thereof, and said apparatus including a voltage-boosting means (16,17) supplied by said generating means, characterised in that it comprises
- means (34, 35) responsive to the variations in the alternating current delivered by said generator means and flowing in a conductor connecting said generator means and said voltage-boosting means, said responsive means being connected to that conductor and delivering a first signal representative of said variations;
- a differencing means (36) for said first signal, capable of generating a second signal which is representative of a positive or negative variation of said current over substantially the entire variation range of said current;
- a level rectifier-adaptor means (37) connected to the output of said differencing means and having two parallel branches (37a, 37b) which respectively transmit the positive and negative components of said signal with different gains;
- a comparator (38), a first input of which is connected to an output of said level rectifier-adaptor means, and a second input of which is connected to a means for producing a reference voltage (28, 29);
- said inhibiting means being pilot-controlled by the comparator.

2. An apparatus according to Claim 1, characterised in that said means responsive to the current comprise a resistor (34) inserted in series in a conductor (22) connecting said generator means to said boosting means, and also a rectifying circuit (35) connected to the terminals of this resistor.

3. An apparatus according to one of the preceding claims, characterised in that said inhibiting means (39) is connected to a blocking input (33) of a chopper oscillator (31), or the like, of the means for production of the aforesaid alternating signal.

4. An apparatus according to one of the preceding claims, characterised in that said inhibiting means is connected to provide pilot control of a means (15) for earthing the output of said voltage-boosting means.

## Patentansprüche

1. ElektrostatischesSpritzgerät für ein Überzugsprodukt, mit einer Versorgungs- und Regeleinheit (12) und einer Spritzvorrichtung (11) für das Überzugsprodukt, die durch eine vorzugsweise eine Litze bildende Leiteranordnung verbunden sind, wobei die genannte Einheit ein Generatormittel (31, 32) zur Erzeugung eines Wechselniederspannungssignals und ein Mittel (39) zu dessen Inhibierung umfaßt, und das Gerät ein von dem Generatormittel versorgtes Mittel (16, 17) zur Spannungserhöhung enthält, dadurch gekennzeichnet, daß es folgendes umfaßt
- Mittel (34, 35), die auf Schwankungen des von dem Generatormittel gelieferten und in einem das Generatormittel mit dem Mittel zur Spannungserhöhung verbindenden Leiter fließenden Wechselstroms ansprechen und diese auf die Wechselstromschwankungen ansprechenden Mittel mit diesem Leiter verbunden sind und ein erstes, die genannten Schwankungen repräsentierendes Signal liefern;
- ein Differenzierglied (36) für das erste Signal, welches sich dazu eignet, ein zweites Signal zu erzeugen, das über im wesentlichen den gesamten Schwankungsbereich des genannten Stroms eine positive oder negative Schwankung des genannten Stroms repräsentiert;
- eine Generator-Pegelanpassungsschaltung (37), die mit dem Ausgang des Differenziergliedes verbunden ist und zwei parallelgeschaltete Zweige (37a, 37b) umfaßt, welche jeweils die positiven und die negativen Anteile des zweiten Signal mit unterschiedlichen Verstärkungen übertragen;
- einen Vergleicher (38), von dem ein erster Eingang mit dem Ausgang der Gleichrichter-Pegelanpassungsschaltung und ein zweiter Eingang mit der Schaltung (28, 29) zur Erzeugung einer Bezugsspannung verbunden ist;
- wobei das Inhibierungsmittel von dem Vergleicher gesteuert wird.

2. Gerät nach Anspruch 1, dadurch gekennzeichnet, daß das auf den Strom empfindliche Mittel einen Widerstand (34), der in Serie in einen das Generatormittel mit dem Spannungserhöhungsmittel verbindenden Leiter (22) eingefügt ist, sowie eine mit den Anschlüssen dieses Widerstandes verbundene Gleichrichterschaltung (35) umfaßt.

3. Gerät nach einem der vorhergehenden Ansprüche, dadurch gekennzeichnet, daß das Inhibierungsmittel (39) mit einem Sperreingang (33) eines Zerhackeroszillators (31) oder dergleichen des Generatormittels für das vorgenannte Wechselsignal verbunden ist.

4. Gerät nach einem der vorhergehenden Ansprüche, dadurch gekennzeichnet, daß das Inhibierungsmittel ein Mittel (15) zur Erdung des Ausganges des genannten Spannungserhöhungsmittels steuert.
